# EUROPÄISCHE PATENTSCHRIFT

(11) **EP 0 735 110 B1**
(45) Veröffentlichungstag und Bekanntmachung des Hinweises auf die Patenterteilung: **12.07.2000**
(21) Anmeldenummer: 96104259.5
(22) Anmeldetag: 18.03.1996
(51) Int. Cl.: C09B 67/22, D06P 1/18, C09B 29/42

(54) **Hydroxypyridonazofarbstoff enthaltende Farbstoffmischungen**
Dye mixtures containing a hydroxypyridone azo dye
Mélanges de colorants contenant un colorant azoique de l'hydroxypyridone

(30) Priorität: 24.03.1995 DE 19510927
(43) Veröffentlichungstag der Anmeldung: 02.10.1996
(73) Patentinhaber: DyStar Textilfarben GmbH & Co. Deutschland KG, 60318 Frankfurt am Main (DE)
(72) Erfinder: Bühler, Ulrich, Dr., 63755 Alzenau (DE); Kruse, Hubert, DI., 61462 Königstein (DE); Kühlwein, Jürgen, Dr., 63150 Heusenstamm (DE)

(56) Entgegenhaltungen:
- EP-A- 0 083 313
- EP-A- 0 378 167
- EP-A- 0 441 166
- DE-A- 3 246 949
- US-A- 4 548 613
- CHEMICAL ABSTRACTS, vol. 110, no. 18, 1.Mai 1989 Columbus, Ohio, US; abstract no. 156040p, Seite 86; XP000060255 & JP-A-63 210 169 (SUMITOMO CHEMICAL CO) 25.Februar 1987
- CHEMICAL ABSTRACTS, vol. 110, no. 26, 26.Juni 1989 Columbus, Ohio, US; abstract no. 233110r, Seite 74; XP000057681 & CS-A-254 574 (PRIKRYL ET AL) 15.September 1988
- CHEMICAL ABSTRACTS, vol. 111, no. 20, 13.November 1989 Columbus, Ohio, US; abstract no. 185313p, Seite 100; XP000250820 & PL-A-152 460 (JABLONSKY ET AL) 31.Dezember 1990

## Beschreibung

Die vorliegende Erfindung betrifft den Farbstoff der Formel Ia 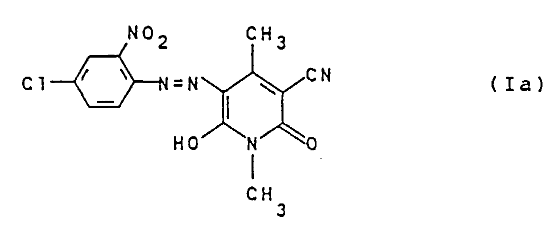 enthaltende Farbstoffmischungen.

Aus der DE-A 19 32 806 ist bereits der gelbe Farbstoff der Formel Ib 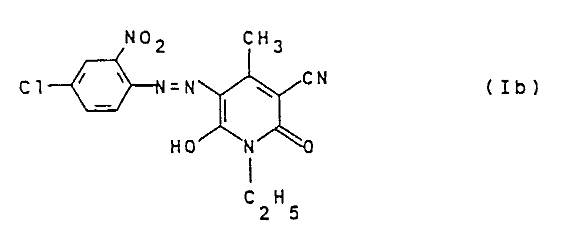 bekannt. Dieser weist allerdings nur ein limitiertes Ziehverhalten auf. Er hat eine begrenztes Aufbauvermögen, eine limitierte Ziehgeschwindigkeit und neigt zu unegalen Färbungen und zu Farbstoffablagerungen auf dem zu färbenden Material durch Rekristallisationsvorgänge. Es hat deshalb nicht an Versuchen gefehlt, diesen Mangel zu beheben.

So werden beispielsweise in der EP-B 83 313 und der DE-A 32 46 949 Mischungen von gelben Farbstoffen der allgemeinen Formel Ic 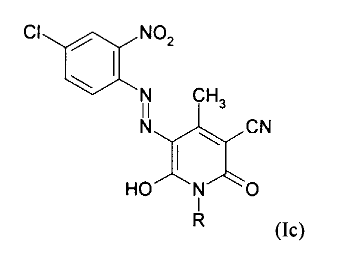 beschrieben, worin R für einen (C₁-C₁₆)-Alkylrest (EP-A 83 313) bzw. für einen (C₃-C₇)n-Alkylrest stehen. Der EP-A 83 313 ist darüberhinaus bereits der gelbe Farbstoff der Formel la, sowie seine Mischung mit dem Farbstoff der Formel Ib zu entnehmen. Eine Mischung des Farbstoffs der Formel la mit einem Dispersionsfarbstoff vom Chinophthalon-Typ, die einen synergistischen Effekt hinsichtlich des Aufbauvermögens zeigt, ist aus US 4,548,613 bekannt.

Der EP-A 83 313 ist darüberhinaus zu entnehmen, daß Mischungen von Farbstoffen der allgemeinen Formel Ic bevorzugt sind, wenn die Reste R (C₄-C₁₄)-Reste darstellen.

Werden diese Mischungen jedoch aus wäßriger Flotte in Kombination mit einem oder mehreren Anthrachinonfarbstoffen, insbesondere mit unten genannten der allgemeinen Formeln II bis VII, auf Polyesterfasermaterialien gefärbt, kommt es, insbesondere beim Einsatz höherer Farbstoffmengen zur Erzielung größerer Farbtiefen, ebenso zu unegalen Färbungen und zu Farbstoffablagerungen auf dem gefärbten Material.

Dies tritt besonders deutlich bei Färbungen von Wickelkörpern, wie Kreuzspul- oder Baumfärbungen, zutage, wo bei hoher Wickeldichte besonders starke Filtrationseffekte auftreten. Die inneren Lagen eines solchen Wickelkörpers werden dabei entsprechend der Strömungsrichtung der Färbeflotte in einer anderen Farbtiefe angefärbt als die äußeren Lagen, und die Farbstoffablagerungen führen zu einer schlechten, nicht akzeptablen Reibechtheit des Färbegutes.

Es wurde nun überraschenderweise gefunden, daß die oben geschilderten Nachteile nicht auftreten, wenn man mit Farbstoffmischungen färbt, die den Farbstoff der Formel Ia enthalten, und daß insbesondere Mischungen der Farbstoffe der Formeln Ia und Ib in ihrer färbestabilen Modifikation von Vorteil sind.

Die vorliegende Erfindung betrifft somit die färbestabile Modifikation der Farbstoffmischung, bestehend aus dem Farbstoff der Formel Ia 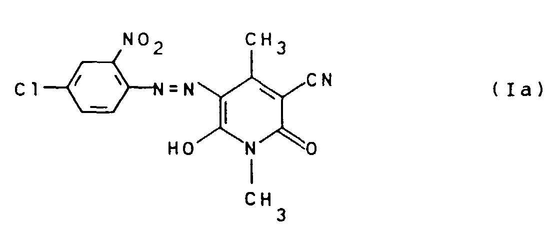 und dem Farbstoff der Formel Ib 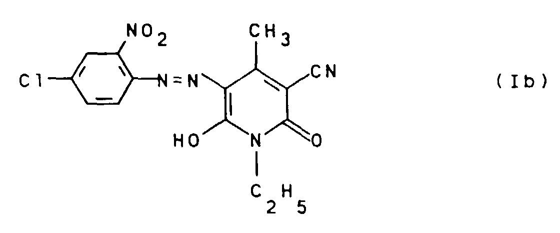 Die erfindungsgemäßen Farbstoffmischungen weisen im Röntenbeugungsdiagramm (Cu-K_{α}-Strahlung) Linien bei folgenden Beugungswinkeln 2 θ (°) auf:

| | | | | |
|---|---|---|---|---|
| Linien starker Intensität | 10,6; | 24,8; | 26,6; | |
| Linien mittlerer Intensität | 6,1; | 14,7; | 21,05; | 22,8; |
| | 25,6; | 27,6; | 28,7. | |

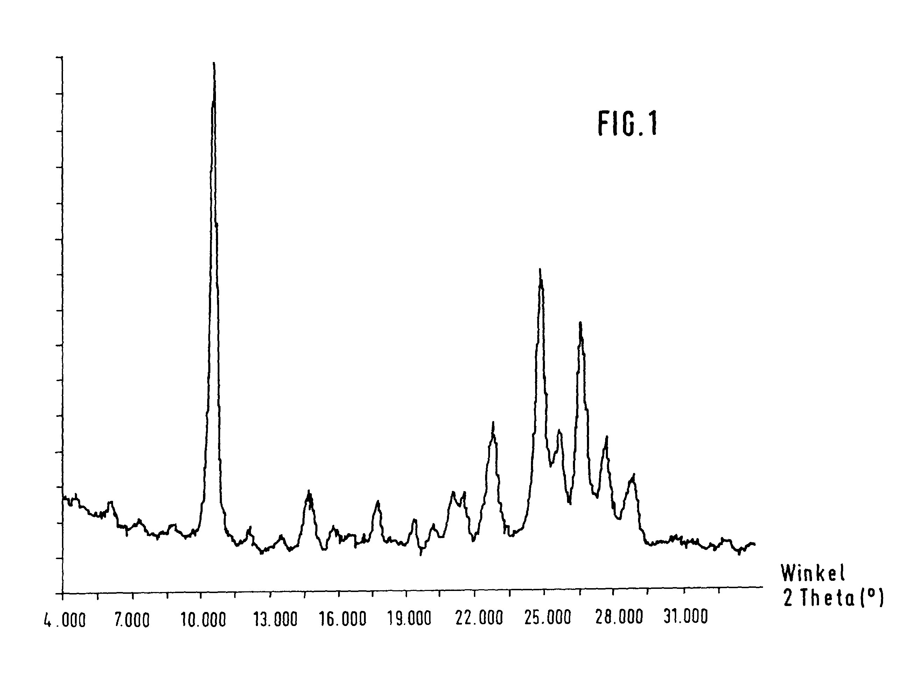

Ein mit Cu-K_{α}-Strahlung aufgenommenes Röntgenbeugungsdiagramm einer erfindungsgemäßen färbestabilen Farbstoffmischung mit einem Verhältnis Farbstoff Formel Ia : Ib = 1 : 1 ist in Figur 1 dargestellt. Zur Aufnahme wurde ein rechnergesteuertes Siemens D 500 Pulverdifraktometer verwendet.

Bevorzugt liegen in den erfindungsgemäßen Farbstoffmischungen die Farbstoffe der Formeln Ia und Ib im Mischungsverhältnis 90 : 10 bis 10 : 90, besonders bevorzugt 65 : 35 bis 35 : 65, vor.

Die vorliegende Erfindung betrifft auch Farbstoffmischungen, dadurch gekennzeichnet, daß sie den Farbstoff der Formel Ia 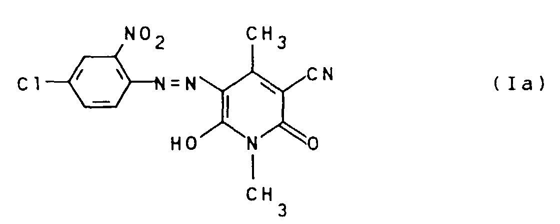 und einen oder mehrere der roten bis türkisfarbenen Farbstoffe der allgemeinen Formeln II bis VII 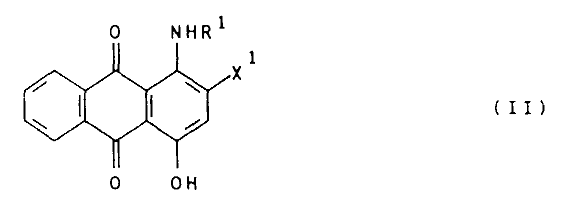 worin
R¹ Wasserstoff, (C₁-C₄)-Alkyl, substituiertes (C₁-C₄)-Alkyl, Phenyl oder substituiertes Phenyl und
X¹ (C₁-C₆)-Alkoxy, substituiertes (C₁-C₆)-Alkoxy, Phenoxy, substituiertes Phenoxy, Brom oder Chlor
   bedeuten; 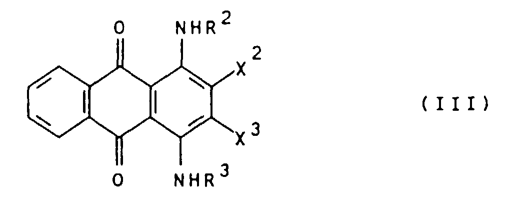 worin
R² Wasserstoff, (C₁-C₄)-Alkyl oder substituiertes (C₁-C₄)-Alkyl,
R³ Wasserstoff, (C₁-C₆)-Alkyl, substituiertes (C₁-C₆)-Alkyl, Cyclohexyl, (C₁-C₄)-Alkylcarbonyl, Phenyl, substituiertes Phenyl, Phenylcarbonyl, substituiertes Phenylcarbonyl, Phenylsulfonyl oder substituiertes Phenylsulfonyl,
X² Wasserstoff, (C₁-C₆)-Alkoxy, substituiertes (C₁-C₆)-Alkoxy, (C₁-C₄)-Alkoxycarbonyl, (C₁-C₄)-Alkylaminocarbonyl, substituiertes (C₁-C₄)-Alkylaminocarbonyl, Phenoxy, substituiertes Phenoxy, Phenoxysulfonyl, Brom oder Chlor, und
X³ Wasserstoff, Phenoxy, substituiertes Phenoxy oder Chlor
   bedeuten; 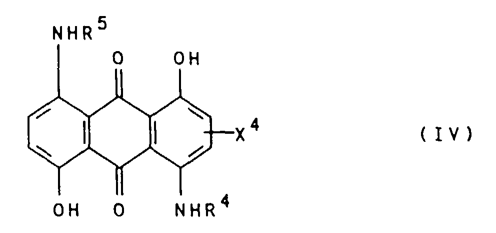 worin
R⁴ und R⁵ unabhängig voneinander Wasserstoff, (C₁-C₆)-oder substituiertes (C₁-C₆)-Alkyl und
X⁴ Wasserstoff, Phenyl, substituiertes Phenyl, Chlor oder Brom
   bedeuten; 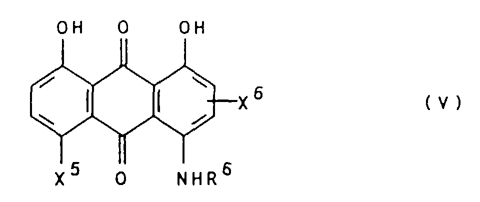 worin
R⁶ Wasserstoff, (C₁-C₄)-Alkyl, substituiertes (C₁-C₄)-Alkyl, Phenyl oder substituiertes Phenyl;
X⁵ (C₁-C₄)-Alkylamino, Nitro oder Amino und
X⁶ Wasserstoff oder Brom
   bedeuten; 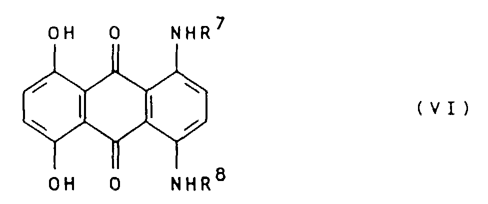 worin
R⁷ und R⁸ unabhängig voneinander Wasserstoff, (C₁-C₄)-Alkyl oder substituiertes (C₁-C₄)-Alkyl
   bedeuten; 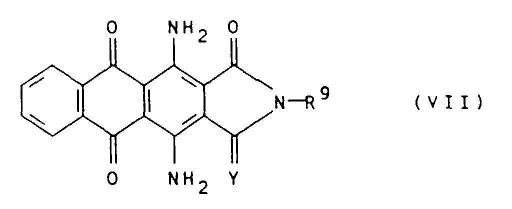 worin
R⁹ (C₁-C₆)-Alkyl oder substituiertes (C₁-C₆)-Alkyl und
Y O oder NH
bedeuten, enthalten.

In einer bevorzugten Ausführungsform enthalten die erfindungsgemäßen Farbstoffmischungen aus dem Farbstoff der Formel Ia und einem oder mehreren der Farbstoffe der allgemeinen Formeln II bis VII als weitere Farbstoffkomponente den Farbstoff der Formel Ib. In diesem Fall ist es darüberhinaus besonders bevorzugt, wenn die Mischung der Farbstoffe der Formeln Ia und Ib ihrer färbestabilen Modifikation vorliegt.

Eine für die Reste R¹ bis R⁹ stehende Alkylgruppe kann geradkettig oder verzweigt sein und beispielsweise Methyl, Ethyl, n-Propyl, i-Propyl, n-Butyl, i-Butyl, sek-Butyl oder tert-Butyl bedeuten. Soweit sie mehr als vier Kohlenstoffatome aufweisen kann, kann sie darüberhinaus auch n-Pentyl oder n-Hexyl bedeuten.

Substituierte Alkylgruppen können beispielsweise substituiert sein durch (C₁-C₄)-Alkoxy, (C₁-C₄)-Alkoxycarbonyl, (C₁-C4)-Alkylcarbonyloxy, (C₁-C₄)-Alkoxy-(C₁-C₄)alkoxy, (C₁-C₄)-Alkoxy-(C₁-C₄)-alkoxycarbonyl, Hydroxy, Hydroxy-(C₁-C₄)-alkoxy, Phenoxy, Benzoyloxy oder Phenoxycarbonyloxy.

Analoges gilt für die für einen der Reste X stehenden Alkoxy- und Alkylaminogruppen.

Ein für einen der Reste R¹ bis R⁹ oder X stehender substituierter Phenylrest kann beispielsweise substituiert sein durch (C₁-C₄)-Alkyl, (C₁-C₄)-Alkoxy, (C₁-C₄)-Alkoxycarbonyl, (C₁-C₄)-Alkoxycarbonyl-(C₁-C₄)-alkoxy, (C₁-C₄)-Alkylcarbonylamino, (C₁-C₄)-Alkylsulfonyloxy, (C₁-C₄)-Alkylcarbonyloxy, Benzoyloxy, Hydroxy-(C₁-C₄)-alkyl, Aminosulfonyl, Chlor, Brom, Hydroxy oder (C₁-C₄)-Alkylmercapto.

Analoges gilt für substituierte Phenoxy-, Phenylcarbonyl-, Phenylsulfonyl- oder Phenoxysulfonyl-Gruppen.

Bevorzugte für R¹ stehende Substituenten sind Ethoxycarbonylethyl, Tetramethylensulfon-3-yl, Phenyl, 4-Methylphenyl, 4-Methoxyphenyl, 4-Acetaminophenyl, 4-Methylsulfonyloxyphenyl, 3-Acetoxyphenyl oder 3-Benzoyloxyphenyl.

Bevorzugte für R² stehende Substituenten sind i-Propyl oder 2-Hydroxyethyl.

Bevorzugte für R³ stehende Substituenten sind Methyl, i-Propyl, 2-Hydroxyethyl, 2-Hydroxyethoxyethyl, Cyclohexyl, Phenylsulfonyl, 4-Methylphenylsulfonyl, Phenyl, 4-Methylphenyl, 4-Methoxyphenyl, Acetyl, Benzoyl oder 4-Chlorbenzoyl.

Bevorzugte für R⁴ und R⁵ stehende Substituenten sind Methyl, Ethyl, i-Propyl, 2-Hydroxyethyl oder 2-Methoxyethoxycarbonylethyl.

Bevorzugte für R⁶ stehende Substituenten sind Methyl, Hydroxymethyl, Phenyl, 4-Ethoxyphenyl, 4-(2-Hydroxyethyl)phenyl oder 3-Aminosulfonylphenyl.

Bevorzugte für R⁷ und R⁸ stehende Substituenten sind Methyl oder 2-Hydroxyethyl.

Bevorzugte für R⁹ stehende Substituenten sind 2-Hydroxyethyl, 2-Hydroxypropyl, 2-n-Butoxyethyl, n-Butoxycarbonylethyl, 3-Methoxypropyl oder 3-i-Propoxypropyl.

Bevorzugte für X¹ stehende Substituenten sind Methyl, 2-Hydroxyethoxy, 2-Methoxyethoxy, 2-Phenoxyethoxy, 2-Propionyloxyethoxy, 2-Benzoyloxyethoxy, 2-Methoxyethoxyethoxy, 2-Ethoxycarbonyloxyethoxy, 2-Phenoxycarbonyloxyethoxy, 3-Hydroxybutoxy, 6-Hydroxyhexoxy, Phenoxy, 4-Chlorphenoxy, 4-Bromphenoxy, 4-Hydroxyphenoxy, 4-Methoxyphenoxy, 4-Acetoxyphenoxy, 4-Methoxycarbonylmethoxyphenoxy, 4-Ethoxycarbonylmethoxy, 4-Methylmerkaptophenoxy, 4-[4-Methylphenylsulfonyloxy]phenoxy oder 4-[3-Ethoxypropylaminosulfonyl]-phenoxy.

Bevorzugte für X² stehende Substituenten sind 2-Methoxyethoxy, 2-Phenoxyethoxy, Methoxycarbonyl, n-Butylaminocarbonyl, 2-Hydroxyethylaminocarbonyl, Phenoxy oder 4-Methoxyphenoxy.

Bevorzugte für X³ stehende Substituenten sind Phenoxy oder 4-Methoxyphenoxy.

Bevorzugte für X⁴ stehende Substituenten sind Phenyl, 4-Hydroxyphenyl, 4-Methoxyphenyl, 4-Acetoxyphenyl, 4-Benzoyloxyphenyl, 4-Ethoxycarbonyloxyphenyl, 4-Hydroxy-3-methylphenyl, 4-Hydroxy-2-methylphenyl oder 4-Methoxy-3-methylphenyl.

X⁵ steht bevorzugt für Methylamino, Amino oder Nitro.

Erfindungsgemäße Farbstoffmischungen aus dem Farbstoff der Formel Ia, gegebenenfalls dem Farbstoff der Formel Ib und einem oder mehreren der Farbstoffe der allgemeinen Formeln II bis VII enthalten bevorzugt einen Farbstoff der allgemeinen Formel II, in der R¹ Wasserstoff bedeutet und X¹ für einen der oben genannten bevorzugten Substituenten steht oder worin X¹ Wasserstoff bedeutet und R¹ für einen der oben genannten bevorzugten Substituenten steht;
oder einen Farbstoff der allgemeinen Formel III, in der R² und R³ Wasserstoff bedeuten und X² und X³ unabhängig voneinander Chlor bedeuten oder für einen der oben genannten bevorzugten Substituenten stehen oder in der R², R³ und X³ Wasserstoff und X² Phenoxysulfonyl bedeuten;
oder einen Farbstoff der allgemeinen Formel IV, in der R⁴ und R⁵ Wasserstoff bedeuten und X⁴ Brom bedeutet oder für einen der oben genannten bevorzugten Substituenten steht;
oder einen Farbstoff der allgemeinen Formel V, in der X⁵ Nitro oder Amino ist und R⁶ für einen der oben genannten bevorzugten Substituenten steht;
oder einen Farbstoff der allgemeinen Formel VI, in der R⁷ und R⁸ unabhängig voneinander für Methyl oder 2-Hydroxyethyl stehen;
oder einen Farbstoff der allgemeinen Formel VII, in der Y O oder NH ist und R⁹ für einen der oben genannten bevorzugten Substituenten steht.

In den erfindungsgemäßen Farbstoffmischungen aus dem Farbstoff der Formel Ia und gegebenenfalls der Formel Ib und einem oder mehreren der Farbstoffe der allgemeinen Formeln II bis VII hängt das Mischungsverhältnis Farbstoff der Formel Ia zu einem oder mehreren der Farbstoffe der allgemeinen Formel II bis VII vom Farbton ab, der gefärbt werden soll. Es beträgt bevorzugt 2 : : 8 bis 8 : 2 besonders bevorzugt 4 : 6 bis 6 : 4.

Die erfindungsgemäße färbestabile Modifikation der Farbstoffmischung, bestehend aus den Farbstoffen der Formel Ia und Ib können durch gemeinsames Erhitzen der Farbstoffe der Formel Ia und Ib in wäßriger Phase auf Temperaturen von 70 bis 150°C, vorzugsweise 90 bis 130°C, erhalten werden.

In der Regel erfolgt dieses Erhitzen in wäßriger Suspension, zweckmäßigerweise unter Rühren. Liegen die anzuwendenden Temperaturen über dem Siedepunkt der wäßrigen Phase, wird die Umwandlung in die färbestabile Modifikation in geschlossenen Gefäßen, beispielsweise Autoklaven, ausgeführt.

Die vollständige Überführung in die färbestabile Modifikation nimmt in der Regel 0,5 bis 5 Stunden in Anspruch, wobei eine Reaktionskontrolle durch röntgenographische oder mikroskopische Untersuchung von während der Hitzebehandlung entnommenen Proben erfolgen kann.

Bei der Überführung in die färbestabile Modifikation kann ein Zusatz einer oder mehrerer oberflächenaktiver Substanzen zu der wäßrigen Phase zweckmäßig sein, insbesondere wenn getrennt synthetisierte Einzelfarbstoffe gemischt und gemeinsam hitzebehandelt werden. Die genannten oberflächenaktiven Substanzen können benetzend, viskositätsmindernd, dispergierend und anlösend wirken und anionischer, kationischer oder nichtionischer Natur sein.

Geeignete oberflächenaktive Substanzen sind z.B. Alkalisalze von Ligninsulfonaten, Alkalisalze der Kondensationsprodukte aus Naphthalinsulfonsäuren und Formaldehyd, Polyvinylsulfonate, oxethylierte Novolake, oxethylierte Fettalkohole, Fettsäurepolyplykolester und tertiäre Phosphorsäureester. Die oberflächenaktiven Substanzen können einzeln oder in Kombination miteinander verwendet werden.

Um eine Verseifung der Farbstoffe zu verhindern, wird bei Farbstoffmischungen, die durch gemeinsame Kupplung der beiden Kupplungskomponenten hergestellt werden und in der Kupplungssuspension erhitzt werden sollen, der pH-Wert dieser Kupplungssuspension vorzugsweise auf 4 bis 8 gestellt.

Nach der gemeinsamen Hitzebehandlung werden die Mischungen aus getrennt synthetisierten oder in einer gemeinsamen Synthese ("Mischkupplung") hergestellten Farbstoffe der Formeln Ia und Ib durch Filtration aus der wäßrigen Suspension isoliert, gewaschen und sodann gefinisht.

Beim Finish werden die erfindungsgemäßen Mischungen der Farbstoffe der Formeln Ia und Ib durch einen Aufmahlvorgang in eine Dispersion, d.h. in eine flüssige oder pulverförmige Farbstoffpräparation, überführt. Dieses Aufmahlen geschieht in Mühlen, wie z.B. Kugel-, Schwing-, Perl- oder Sandmühlen oder in Knetern. Nach der Aufmahlung liegt die Größe der Farbstoffteilchen bei ca. 0,1 bis 10 µm, vorzugsweise bei ca. 1 µm. Die Aufmahlung erfolgt in Gegenwart von Dispergiermitteln, die nicht ionogen oder anionaktiv sein können. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat. Auch Netzmittel, Frostschutzmittel, Entstaubungsmittel oder Hydrophilierungsmittel können enthalten sein.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Es ist jedoch auch möglich, Mischungen aus getrennt synthetisierten Farbstoffen der Formeln Ia und Ib unmittelbar nach der Wärmebehandlung ohne Zwischenisolierung zu finishen, das heißt in die handelsüblichen Pulver- oder Flüssigpräparationen zu überführen. Zu diesem Zweck wird die wärmebehandelte Suspension durch Mahlung in eine Dispersion überführt. Es ist dabei zweckmäßig, die Wärmebehandlung in Gegenwart derjenigen Dispergier- und gegebenenfalls auch Hilfsmittel durchzuführen, die in der gefinishten Pulver- oder Flüssigpräparation enthalten sein sollen. Diese sind mit den oben genannten oberflächenaktiven Substanzen identisch. Wurde während der Wärmebehandlung nicht die Gesamtmenge dieser Dispergier-und Hilfsmittel zugesetzt, so wird vor der Mahlung die Restmenge zugegeben. Zur Wärmebehandlung werden in diesem Falle in der Regel 10 bis 400 Gew.%, vorzugsweise 20 bis 200 Gew.%, oberflächenaktive Substanzen, bezogen auf die Farbstoffmischungen in der färbestabilen Modifikation, zugegeben.

Die färbestabile Modifikation von Mischungen aus Farbstoffen der Formeln Ia und Ib benetzt beim Ansetzen von Färbe- und Klotzflotten sowie auch von Druckteigen besser als die unstabilisierte Modifikation und läßt sich rasch und ohne aufwendiges manuelles oder maschinelles Rühren dispergieren. Die Flotten und Druckteige sind homogen und lassen sich in modernen Farbküchen problemlos verarbeiten, ohne die Düsen zu verstopfen.

Die Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart der Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern. Die thermische Stabilität äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedriung der Fertigungskosten.

Erfindungsgemäße Farbstoffmischungen aus dem Farbstoff der Formel Ia, gegebenenfalls Farbstoff der Formel Ib sowie einem oder mehreren der Farbstoffe der allgemeinen Formeln II bis VII lassen sich durch einfaches Mischen der Komponenten, gegebenenfalls in gefinishter Form, herstellen. Vorzugsweise erfolgt das Mischen des Farbstoffs der Formel Ia bzw. von Mischungen der Farbstoffe der Formeln Ia und Ib mit den Farbstoffen der Formeln II bis VII in gefinishter Form in der Färbeflotte.

Die Farbstoffe der Formeln Ia und Ib können in an sich bekannter Weise dadurch hergestellt werden, daß 4-Chlor-2-nitroanilin diazotiert und auf 1,4-Dimethyl-3-cyano-6-hydroxypyridon-2 bzw. auf 1-Ethyl-3-cyano-4-methyl-6-hydroxypyridon-2 gekuppelt wird.

Die Diazotierung kann erfolgen in Schwefelsäure oder wäßriger Schwefelsäure bzw. in organischen Carbonsäuren, evtl. ebenfalls unter Wasserzusatz. Bevorzugt wird sie in Salzsäure durchgeführt. Als nitrosierende Agentien werden Alkalinitrite, wie beispielsweise Natriumnitrit in fester Form oder als wäßrige Lösung, oder aber Nitrosylschwefelsäure, eingesetzt. Die Diazotiertemperatur liegt zwischen -5 und 30°C, vorzugsweise zwischen 0 und 20°C.

Die Kupplung erfolgt durch Zugabe der Diazolösung zur Lösung oder Suspension des Kupplers im Temperaturbereich zwischen 0 und 35°C. Der pH-Wert des vorgelegten Kupplers ist von der Kupplung vorzugsweise schwach alkalisch bis alkalisch. Der Zusatz eines Puffers, wie beispielsweise Natriumacetat, kann vorteilhaft sein.

Es ist auch möglich, die Kupplung durchzuführen, indem man den Kuppler als schwach saure, beispielsweise essigsaure Lösung oder Suspension bzw. Diazolösung gibt. Auch hier kann der Zusatz eines Puffers vorteilhaft sein.

Zur Reduzierung der Filtrierzeit und der Erhöhung des Farbstoffgehaltes im Filterkuchen kann es vorteilhaft sein, den Farbstoff nach der Kupplung im Kupplungsansatz auf Temperaturen zwischen 50 und 130°C zu erwärmen. Zweckmäßigerweise wird auch hier der pH-Wert des Ansatzes eingestellt auf einen Wert zwischen 4 und 8.

Die Farbstoffe der allgemeinen Formeln II bis VII sind im Handel erhältlich oder können nach bekannten Methoden hergestellt werden.

Die oben beschriebenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, soweit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dgl., und gegebenenfalls weiteren Zusätzen, wie z.B. Fixierbeschleunigern, Netzmitteln und Oxydationsmitteln, zu Druckpasten verknetet.

Die erfindungsgemäßen färbestabilen Mischungen der Farbstoffe der Formeln Ia und Ib sind, auch im Gemisch mit anderen Dispersionsfarbstoffen, vorzüglich zum Färben und Bedrucken von hydrophoben synthetischen Materialien geeignet. Als hydrophobe synthetische Materialien kommen z.B. in Betracht: Cellulose-2½-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, wie insbesondere Wolle oder Cellulose, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffmischungen kann in an sich bekannter Weise erfolgen, vorzugsweise aus wäßriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird. Das Bedrucken der genannten Materialien kann in an sich bekannter Weise so durchgeführt werden, daß die erfindungsgemäßen Farbstoffmischungen in eine Druckpaste einverleibt werden und die damit bedruckte Ware zur Fixierung des Farbstoffs, gegebenenfalls in Gegenwart eines Carriers, bei Temperaturen zwischen 180 bis 230°C mit HT-Dampf oder Trockenhitze behandelt wird. Man erhält auf diese Weise sehr farbstarke grünstichig gelbe Färbungen und Drucke mit sehr guten Echtheiten, insbesondere mit sehr guten Licht-, Reib-, Thermofixier-,Wasch-, Wasser- und Thermomigrierechtheiten.

Die erfindungsgemäßen Farbstoffmischungen eignen sich auch zum Färben der vorstehend aufgeführten hydrophoben Materialien aus organischen Lösungsmitteln nach den hierbei bekannten Methoden und zum Färben in der Masse.

Die Überlegenheit der Mischungen der Farbstoffe der Formeln Ia und Ib, insbesondere in der erfindungsgemäßen färbestabilen Modifikation, wird besonders deutlich beim Färben aus wäßrigem Färbebad unter modernen Praxisbedingungen. Dies trifft insbesondere dann zu, wenn mit erfindungsgemäßen Farbstoffmischungen aus dem Farbstoff der Formel Ia, gegebenenfalls dem Farbstoff der Formel Ib und einem oder mehreren der Farbstoffe der allgemeinen Formeln II und VII gefärbt wird.

Die genannten modernen Praxisbedingungen sind gekennzeichnet durch hohe Wickeldichten bei Kreuzspul- und Baumfärbungen, kurze Flottenverhältnisse, also hohe Farbstoffkonzentrationen sowie hohe Scherkräfte in der Färbeflotte bedingt durch hohe Pumpenleistungen. Auch unter diesen Bedingungen neigen die erfindungsgemäßen Farbstoffmischungen nicht zur Agglomeration, und es kommt nicht zur Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit der erfindungsgemäßen färbestabilen Modifikation schließlich wird ebenfalls ein homogenes, stippenfreies Warenbild erhalten.

### Beispiel 1

0,9 g eines gefinishten Pulvers des Farbstoffs der Formel Ia mit 50 % Farbstoffgehalt und 0,9 g einer pulverförmigen Handelsware des roten Farbstoffs der Formel II, in der X¹ Phenoxy und R¹ Wasserstoff bedeutet, werden in 2 l Wasser eingerührt, mit 2 g eines Kondensationsprodukts aus m-Kresol, Formaldehyd und Natriumbisulfit und 4 g wasserfreiem Natriumacetat versetzt, mit Essigsäure auf pH 4,5 gestellt und auf 60°C erwärmt. In dieser Färbeflotte bringt man eine eng gewickelte Kreuzspule aus 100 g texturierten Polyestergarn ein und erwärmt die Flotte und das zu färbende Gut auf 130°C, wobei die Flotte mit einem Durchfluß von 12 l/kg/ min die Kreuzspule von innen nach außen durchströmt. Nachdem die Temperatur eine halbe Stunde bei 130°C gehalten worden ist, wurde abgekühlt, die Kreuzspule aus der Restflotte herausgenommen, gespült und getrocknet.

Reibt man an der Oberseite dieser Kreuzspule mit einem weißen Baumwolläppchen, so bleibt dieses rein weiß. Wird das gefärbte Garn zu einem Strumpf verstrickt, so ist dieser Strumpf über seine gesamte Länge homogen gefärbt, d.h. das eingesetzte Garn ist auf der Kreuzspule homogen gefärbt worden.

### Vergleichsversuch

Wird anstelle des Farbstoffs der Formel Ia in Beispiel 1 die gleiche Menge eines ebenfalls 50%igen handelsüblichen Farbstoffs der Formel Ib eingesetzt und weiter verfahren, wie in diesem Beispiel beschrieben, verstopft die Kreuzspule in der Aufheizphase dadurch, daß sich größere Mengen Farbstoffs abgelagert haben. Die fertiggestellte Kreuzspule zeigt einen starken Abrieb, und das Garn weist deutliche Farbstärkeunterschiede an der Innen- und Außenspule auf.

### Beispiel 2

Man ersetzt in Beispiel 1 den Farbstoff der Formel Ia durch die gleiche Menge einer 1 : 1-Mischung aus den Farbstoffen der Formeln Ia und Ib, die in der färbestabilen Modifikation vorliegt, und den gleichen Farbstoffgehalt. Weiter ersetzt man den Farbstoff der Formel II durch die gleiche Menge eines handelsüblichen blauen Farbstoffs der Formel VII in der R⁹ eine Mischung aus Methoxy- und i-Propoxypropyl und Y 0 ist.

Färbt man dann, wie in Beispiel 1 beschrieben, so erhält man ebenfalls ein homogen gefärbtes Garn, das keinen Abrieb zeigt.

### Beispiel 3

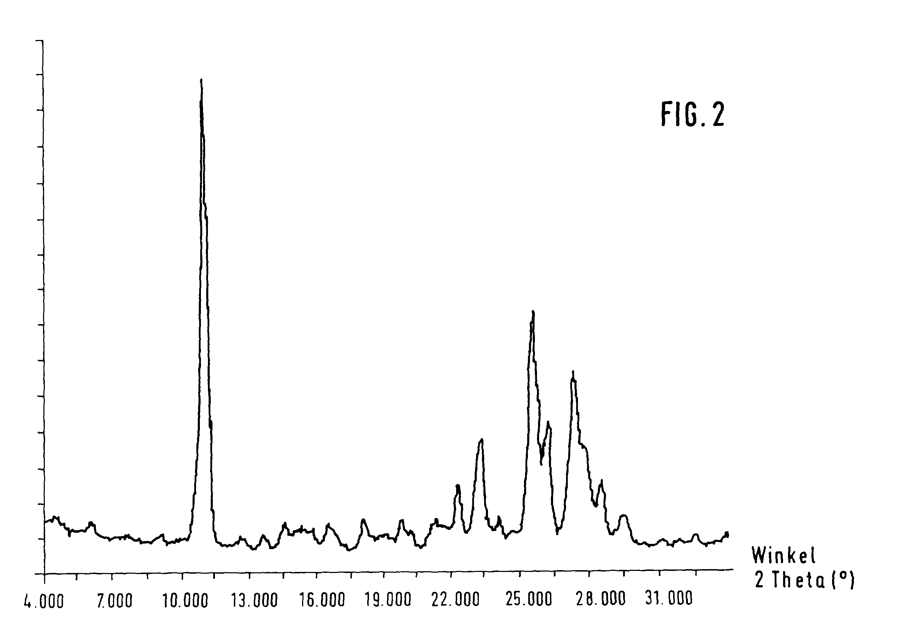

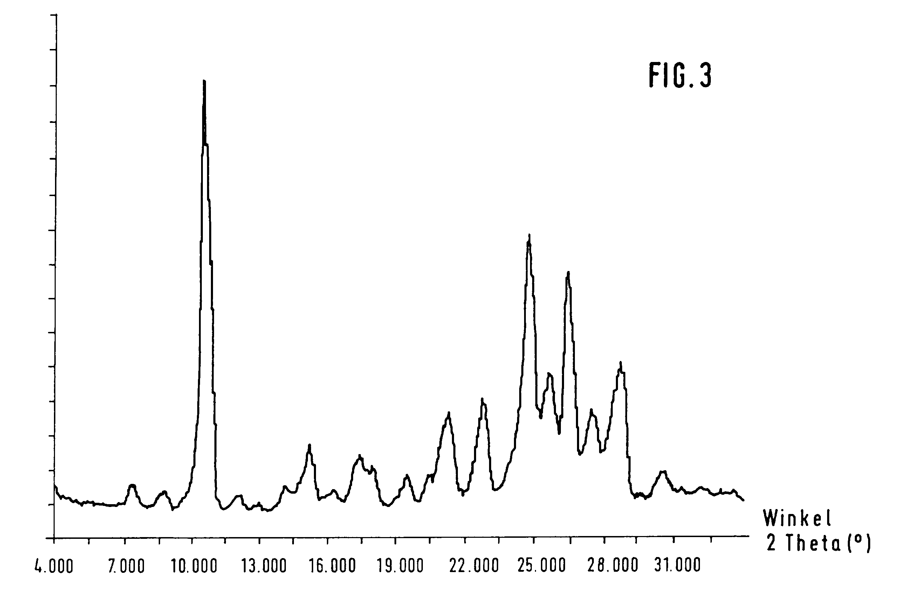

a) 50 g des Farbstoffs der Formel Ia, der das in Figur 2 wiedergegebene Röntgenbeugungsdiagramm (Cu-K_{α}-Strahlung) aufweist und 50 g des Farbstoffs der Formel Ib, der durch das in Figur 3 wiedergegebene Röntgenbeugungsdiagramm charakterisiert ist, werden in Gegenwart von 1 g eines Ligninsulfonats in 1000 ml Wasser in einem Autoklaven 2 Stunden auf 135°C erhitzt, abgekühlt, filtriert und mit Wasser gewaschen. Das Röntgenbeugungsdiagramm einer getrockneten Probe dieser stabilisierten Mischung ist mit dem der Figur 1 identisch.
b) 50 g der gemäß Beispiel 3a) stabilisierten Farbstoffmischung werden mit 35 g eines Ligninsulfonats und 15 g eines Kondensationsprodukts aus m-Kresol, Phenol, Nonylphenyl, Formaldehyd und Natriumbisulfit und Wasser in einer Sandmühle bis zur Feinverteilung, bei der 90 % der Farbstoffteilchen gleich oder kleiner als 1 µm sind, aufgemahlen. Der so erhaltene Mahlteig wird in einem Sprühtrockner bei einer Eingangstemperatur von 155°C und einer Ausgangstemperatur von 85°C sprühgetrocknet.
   Wird das so erhaltene Pulver zur Herstellung einer Färbeflotte in Wasser gegeben, so dispergiert es teilweise schon beim Absinken auf den Gefäßboden und vollständig nach kurzem Umrühren.
c) 0,65 g des so erhaltenen Farbstoffs werden in 2000 g Wasser dispergiert. Die Dispersion wird mit 4 g Ammoniumsulfat, 2 g eines handelsübldichen Dispergiermittels auf Basis eines Kondensationsprodukts aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt eine halbe Stunde bei 120°C. Nach anschließendem Spülen, reduktiver Nachbehandlung mit einer 0,2%igen Natriumdithionitlösung während 15 Minuten bei 70 bis 80°C Spülen und Trocknen erhält man eine farbstarke gelbe Färbung mit hervorragenden coloristischen Eigenschaften.

Bringt man zur Herstellung eines Nachzugs in das Färbebad nochmals 100 g eines texturierten Polyestergewebes auf Basis Polyethylengylkolterephthalat ein und färbt 1 Stunde bei 135°C und behandelt den Nachzug wie vorstehend bei der eigentlichen Färbung angegeben nach, so erhält man eine nahezu farblose Färbung.

## Patentansprüche

1. Färbestabile Modifikation der Farbstoffmischung bestehend aus dem Farbstoff der Formel la 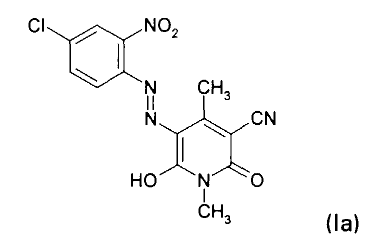 und dem Farbstoff Ib 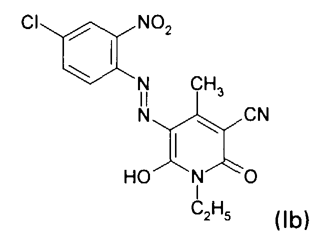 die im Röntgenbeugungsdiagramm (Cu-K_{α}-Strahlung) Linien bei folgenden Beugungswinkeln 2θ (°) aufweist:
Linien starker Intensität: 10,6; 24,8; 26,6;
Linien mittlerer Intensität: 6,1; 14,7; 21,05; 22,8; 25,6; 27,6; 28,7.

2. Farbstoffmischung gemäß Anspruch 1, dadurch gekennzeichnet, daß die Farbstoffe der Formeln Ia und Ib im Mischungsverhältnis 90 : 10 bis 10 : 90, besonders bevorzugt 65 : 35 bis 35 : 65, vorliegen.

3. Farbstoffmischung, dadurch gekennzeichnet, daß sie den Farbstoff der Formel Ia 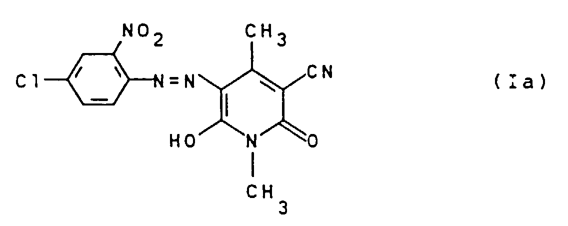 und einen oder mehrere der roten bis türkisfarbenen Farbstoffe der allgemeinen Formeln II bis VII 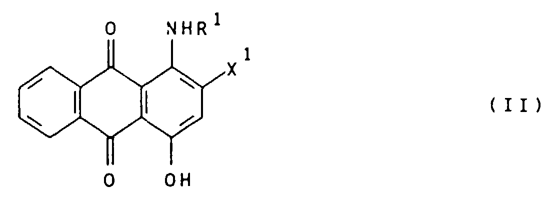 worin
R¹ Wasserstoff, (C₁-C₄)-Alkyl, substituiertes (C₁-C₄)-Alkyl, Phenyl oder substituiertes Phenyl und
X¹ (C₁-C₆)-Alkoxy, substituiertes (C₁-C₆)-Alkoxy, Phenoxy, substituiertes Phenoxy, Brom oder Chlor
bedeuten; 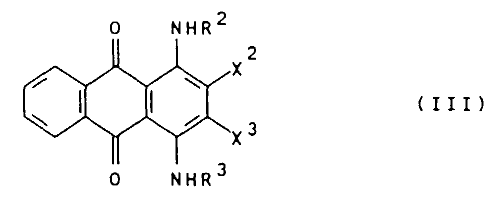 worin
R² Wasserstoff, (C₁-C₄)-Alkyl oder substituiertes (C₁-C₄)-Alkyl,
R³ Wasserstoff, (C₁-C₆)-Alkyl, substituiertes (C₁-C₆)-Alkyl, Cyclohexyl, (C₁-C₄)-Alkylcarbonyl, Phenyl, substituiertes Phenyl, Phenylcarbonyl, substituiertes Phenylcarbonyl, Phenylsulfonyl oder substituiertes Phenylsulfonyl,
X² Wasserstoff, (C₁-C₆)-Alkoxy, substituiertes (C₁-C₆)-Alkoxy, (C₁-C₄)-Alkoxycarbonyl, (C₁-C₄)-Alkylaminocarbonyl, substituiertes (C₁-C₄)-Alkylaminocarbonyl, Phenoxy, substituiertes Phenoxy, Phenoxysulfonyl, Brom oder Chlor, und
X³ Wasserstoff, Phenoxy, substituiertes Phenoxy oder Chlor
bedeuten; 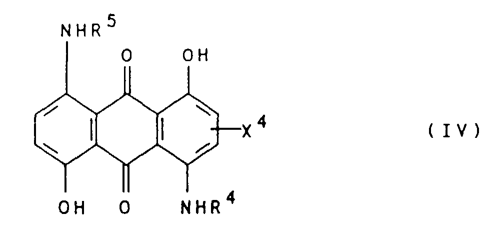 worin
R⁴ und R⁵ unabhängig voneinander Wasserstoff, (C₁-C₆)-Alkyl oder substituiertes (C₁-C₆)-Alkyl und
X⁴ Wasserstoff, Phenyl, substituiertes Phenyl, Chlor oder Brom
bedeuten; 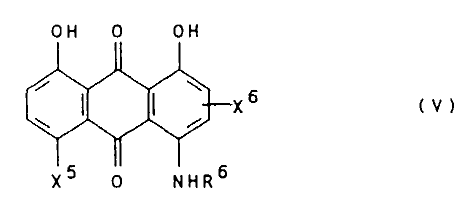 worin
R⁶ Wasserstoff, (C₁-C₄)-Alkyl, substituiertes (C₁-C₄)-Alkyl, Phenyl oder substituiertes Phenyl;
X⁵ (C₁-C₄)-Alkylamino, Nitro oder Amino und
X⁶ Wasserstoff oder Brom
bedeuten; 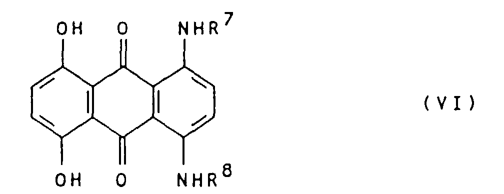 worin
R⁷ und R⁸ unabhängig voneinander Wasserstoff, (C₁-C₄)-Alkyl oder substituiertes (C₁-C₄)-Alkyl bedeuten; 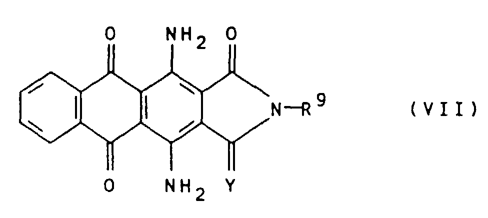 worin
R⁹ (C₁-C₆)-Alkyl oder substituiertes (C₁-C₆)-Alkyl und
Y O oder NH
bedeuten, enthalten.

4. Farbstoffmischung gemäß Anspruch 3, dadurch gekennzeichnet, daß als weitere Farbstoffkomponente der Farbstoff der Formel Ib 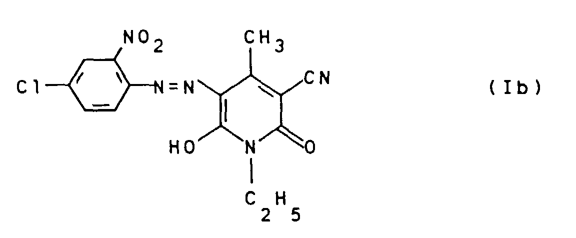 enthalten ist.

5. Farbstoffmischung gemäß Anspruch 4, dadurch gekennzeichnet, daß die Farbstoffe der Formel Ia und Ib in Form ihrer färbestabilen Modifikation vorliegen.

6. Verfahren zur Herstellung der färbestabilen Modifikation gemäß Anspruch 1, dadurch gekennzeichnet, daß die Farbstoffe der Formeln Ia und Ib gemeinsam in wäßriger Phase auf Temperaturen von 70 bis 150°C, vorzugsweise 90 bis 130°C, erhitzt werden.

7. Verwendung der Farbstoffmischungen gemäß Ansprüchen 1 bis 5 zum Färben und Bedrucken von hydrophoben synthetischen Materialien.

## Claims

1. Dyeing-stable modification of the dye mixture consisting of the dye of the formula Ia 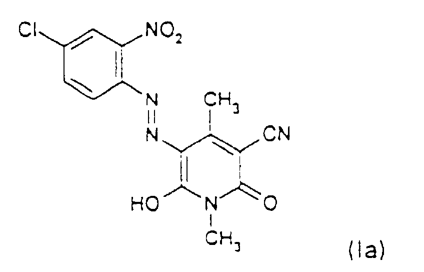 and the dye Ib 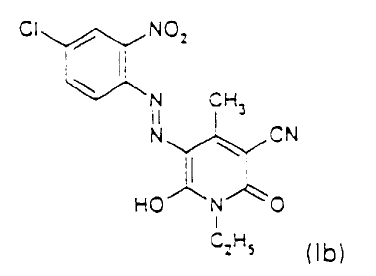 characterized by an x-ray diffraction pattern (Cu-K_{α}) showing relatively strong peaks at a diffraction angle 2θ of 10.6°, 24.8° and 26.6° and intermediate peaks at a diffraction angle 2θ of 6.1°, 14.7°, 21.05°, 22.8°, 25.6°, 27.6° and 28.7°.

2. A dye mixture as claimed in claim 1, characterized in that the dyes of the formulae Ia and Ib are present in a blend ratio of 90:10 to 10:90, particularly preferably 65:35 to 35:65.

3. A dye mixture characterized in that it contains the dye of the formula Ia 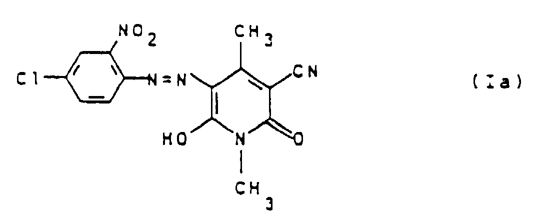 and one or more of the red to turquoise dyes of the general formulae II to VII 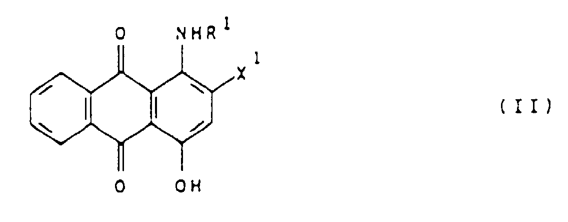 where
R¹ is hydrogen, (C₁-C₄)-alkyl, substituted (C₁-C₄)-alkyl, phenyl or substituted phenyl and
X¹ is (C₁-C₆)-alkoxy, substituted (C₁-C₆)-alkoxy, phenoxy, substituted phenoxy, bromine or chlorine; 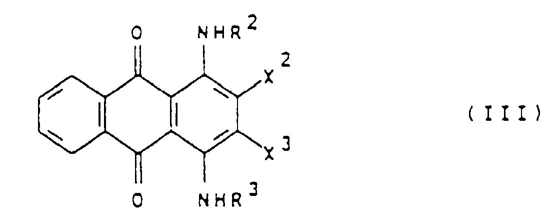 where
R² is hydrogen, (C₁-C₄)-alkyl or substituted (C₁-C₄)-alkyl,
R³ is hydrogen, (C₁-C₆)-alkyl, substituted (C₁-C₆)-alkyl, cyclohexyl, (C₁-C₄)-alkylcarbonyl, phenyl, substituted phenyl, phenylcarbonyl, substituted phenylcarbonyl, phenylsulfonyl or substituted phenylsulfonyl,
X² is hydrogen, (C₁-C₆)-alkoxy, substituted (C₁-C₆)-alkoxy, (C₁-C₄)-alkoxycarbonyl, (C₁-C₄)-alkylaminocarbonyl, substituted (C₁-C₄)-alkylaminocarbonyl, phenoxy, substituted phenoxy, phenoxysulfonyl, bromine or chlorine, and
X³ is hydrogen, phenoxy, substituted phenoxy or chlorine; 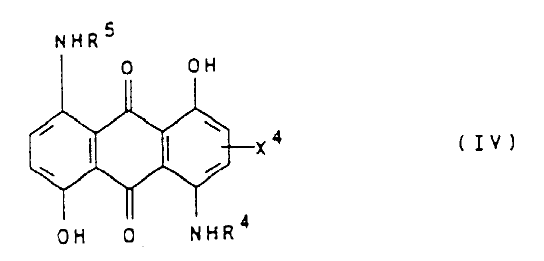 where
R⁴ and R⁵ are independently hydrogen, (C₁-C₆)-alkyl or substituted (C₁-C₆)-alkyl, and
X⁴ is hydrogen, phenyl, substituted phenyl, chlorine or bromine; 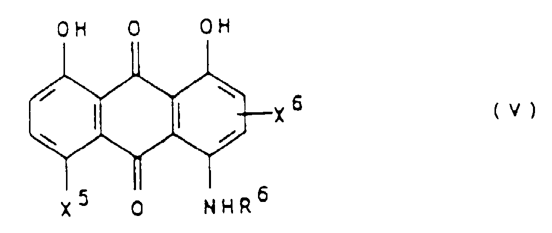 where
R⁶ is hydrogen, (C₁-C₄)-alkyl, substituted (C₁-C₄)-alkyl, phenyl or substituted phenyl;
X⁵ is (C₁-C₄)-alkylamino, nitro or amino, and
X⁶ is hydrogen or bromine; 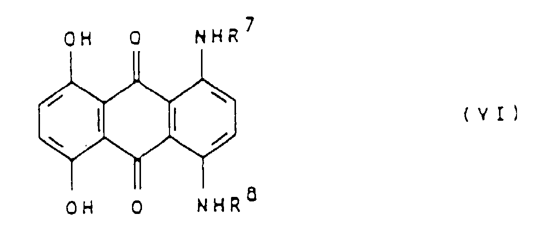 where
R⁷ and R⁸ are independently hydrogen, (C₁-C₄)-alkyl or substituted (C₁-C₄)-alkyl; 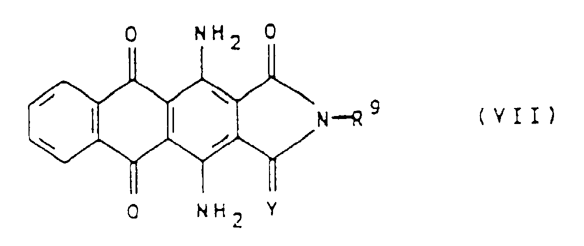 where
R⁹ is (C₁-C₆)-alkyl or substituted (C₁-C₆)-alkyl, and
Y is O or NH.

4. A dye mixture as claimed in claim 3, characterized in that the dye of the formula Ib 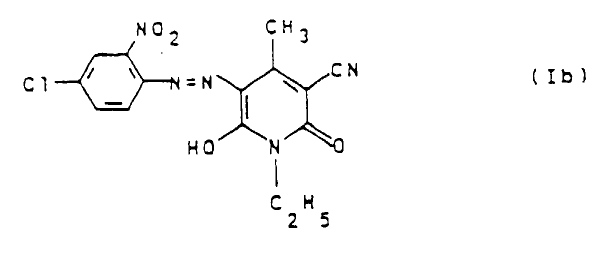 is present as a further dye component.

5. A dye mixture as claimed in claim 4, characterized in that the dyes of the formula Ia and Ib are present in the form of their stable dyeing polymorph.

6. A process for preparing the dyeing-stable modification of claim 1, characterized in that the dyes of the formulae Ia and Ib are jointly heated in an aqueous phase to temperatures of 70 to 150°C, preferably 90 to 130°C.

7. The use of the dye mixtures of claims 1 to 5 for dyeing and printing hydrophobic synthetic materials.

## Revendications

1. Modification stable lors de la teinture, du mélange de colorants, constitué du colorant de formule Ia 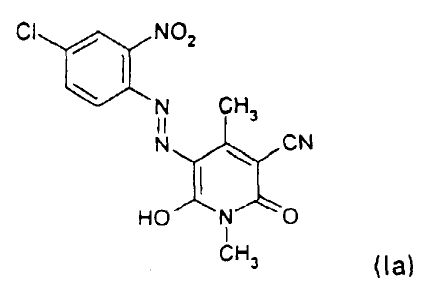 et du colorant Ib, 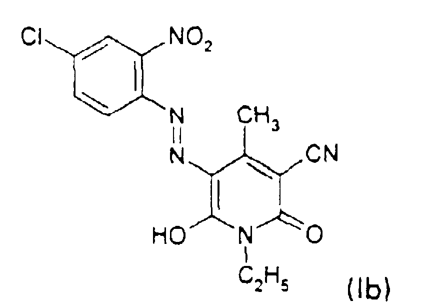 qui présente dans le diagramme de diffraction de rayons X (rayonnement Cu-K_{α}) des raies aux angles de diffraction 2θ (°) suivants :
Raies de forte intensité : 10,6; 24,8; 26,6;
Raies d'intensité moyenne : 6,1; 14,7; 21,05; 22,8; 25,6; 27,6; 28,7.

2. Mélange de colorants suivant la revendication 1, caractérisé en ce que les colorants des formules Ia et Ib sont présents dans un rapport de mélange de 90:10 à 10:90, de manière particulièrement préférée de 65:35 à 35:65.

3. Mélange de colorants, caractérisé en ce qu'il contient le colorant de formule Ia 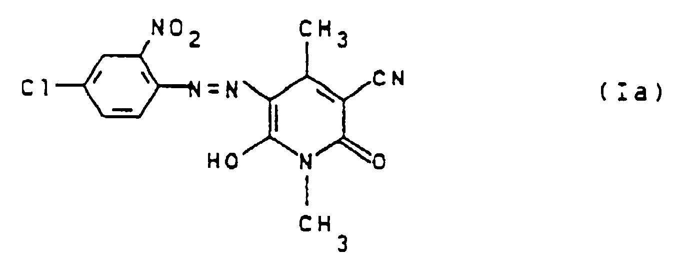 et un ou plusieurs des colorants rouges à turquoises des formules générales II à VII 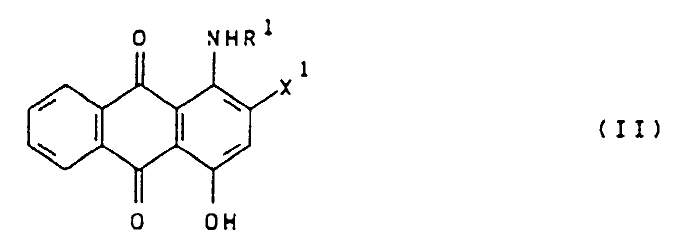 dans laquelle
R¹ signifie un hydrogène, un alkyle en C₁-C₄, un alkyle en C₁-C₄ substitué, un phényle ou un phényle substitué, et
X¹ signifie un alcoxy en C₁-C₆, un alcoxy en C₁-C₆ substitué, un phénoxy, un phénoxy substitué, un brome ou un chlore; 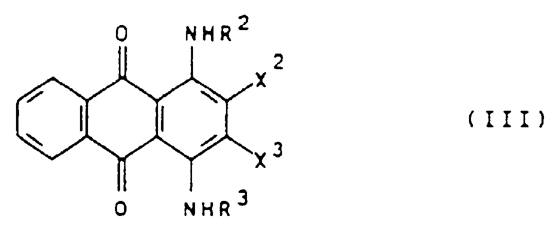 dans laquelle
R² signifie un hydrogène, un alkyle en C₁-C₄ ou un alkyle en C₁-C₄ substitué,
R³ signifie un hydrogène, un alkyle en C₁-C₆, un alkyle en C₁-C₆ substitué, un cyclohexyle, un alkylcarbonyle en C₁-C₄, un phényle, un phényle substitué, un phénylcarbonyle, un phénylcarbonyle substitué, un phénylsulfonyle ou un phénylsulfonyle substitué,
X² signifie un hydrogène, un alcoxy en C₁-C₆, un alcoxy en C₁-C₆ substitué, un alcoxycarbonyle en C₁-C₄, un alkylaminocarbonyle en C₁-C₄, un alkylaminocarbonyle en C₁-C₄ substitué, un phénoxy, un phénoxy substitué, un phénoxysulfonyle, un brome ou un chlore, et
X³ signifie un hydrogène, un phénoxy, un phénoxy substitué ou un chlore; 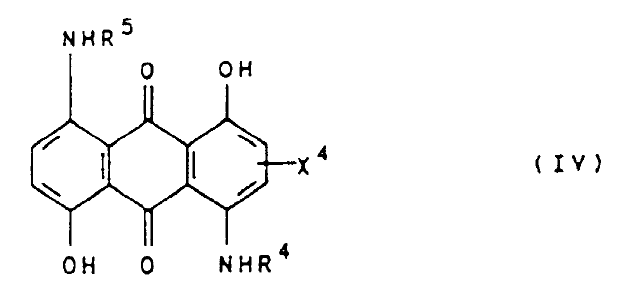 dans laquelle
R⁴ et R⁵ signifient, indépendamment l'un de l'autre, un hydrogène, un alkyle en C₁-C₆ ou un alkyle en C₁-C₆ substitué, et
X⁴ signifie un hydrogène, un phényle, un phényle substitué, un chlore ou un brome; 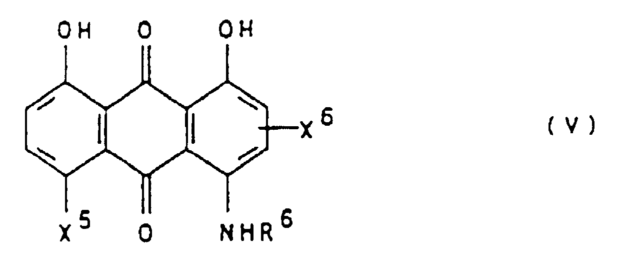 dans laquelle
R⁶ signifie un hydrogène, un alkyle en C₁-C₄, un alkyle en C₁-C₄ substitué, un phényle ou un phényle substitué,
X⁵ signifie un alkylamino en C₁-C₄, un nitro ou un amino, et
X⁶ signifie un hydrogène ou un brome; 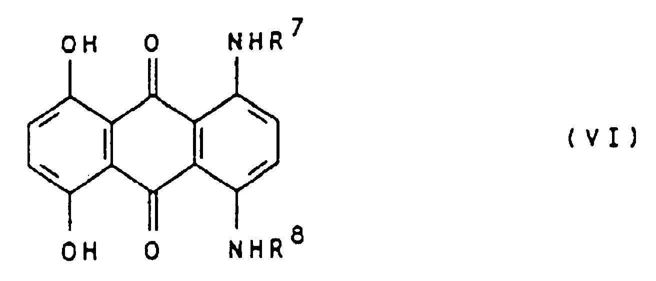 dans laquelle
R⁷ et R⁸ signifient, indépendamment l'un de l'autre, un hydrogène, un alkyle en C₁-C₄ ou un alkyle en C₁-C₄ substitué; 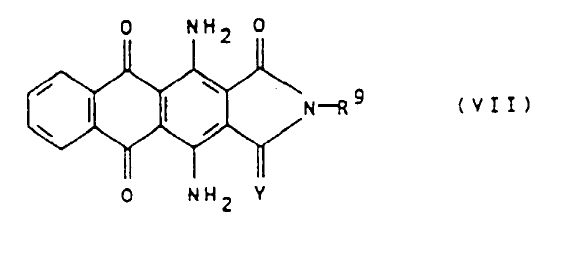 dans laquelle
R⁹ signifie un alkyle en C₁-C₆ ou un alkyle en C₁-C₆ substitué, et
Y signifie O ou NH.

4. Mélange de colorants suivant la revendication 3, caractérisé en ce que le colorant de formule Ib 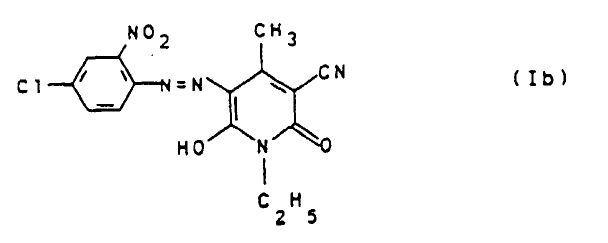 est contenu comme autre composant colorant.

5. Mélange de colorants suivant la revendication 4, caractérisé en ce que les colorants des formules Ia et Ib sont présents sous la forme de leur modification stable lors de la teinture.

6. Procédé de préparation de la modification stable lors de la teinture suivant la revendication 1, caractérisé en ce que les colorants des formules Ia et Ib sont chauffés ensemble en phase aqueuse à des températures de 70 à 150°C, de préférence 90 à 130°C.

7. Utilisation des mélanges de colorants suivant les revendications 1 à 5 pour teindre et imprimer des matières synthétiques hydrophobes.
